(19) Europäisches Patentamt / European Patent Office / Office européen des brevets

(11) **EP 1 611 621 B1**

(12) **EUROPEAN PATENT SPECIFICATION**

(45) Date of publication and mention of the grant of the patent:
**17.12.2008 Bulletin 2008/51**

(51) Int Cl.:
*H01M 2/00* (2006.01)  *H01M 4/56* (2006.01)
*H01M 4/58* (2006.01)

(21) Application number: **04712886.3**

(22) Date of filing: **19.02.2004**

(86) International application number:
**PCT/US2004/004949**

(87) International publication number:
**WO 2004/075315 (02.09.2004 Gazette 2004/36)**

(54) **BATTERY CONTAINING FIBROUS MATERIAL**

BATTERIE MIT FASERMATERIAL

BATTERIE CONTENANT UNE MATIERE FIBREUSE

(84) Designated Contracting States:
**AT BE BG CH CY CZ DE DK EE ES FI FR GB GR HU IE IT LI LU MC NL PT RO SE SI SK TR**

(30) Priority: **19.02.2003 US 449339 P**

(43) Date of publication of application:
**04.01.2006 Bulletin 2006/01**

(73) Proprietor: **KVG Technologies Inc.**
**East Walpole, MA 02032 (US)**

(72) Inventor: **ZGURIS, George, C.**
**Canterbury, NH 03224 (US)**

(74) Representative: **Charig, Raymond Julian**
**Potter Clarkson LLP**
**Park View House**
**58 The Ropewalk**
**Nottingham**
**NG1 5DD (GB)**

(56) References cited:
EP-A1- 0 443 451      DE-C1- 4 242 661
JP-A- 5 303 978       JP-A- 59 157 967
US-A- 4 414 295       US-A- 4 652 505
US-A- 4 707 066       US-A- 4 908 282
US-B1- 6 268 088

## Description

The invention relates to batteries, such as lead acid batteries, that contain fibrous material, as well as methods of making and using such batteries.

## BACKGROUND

Batteries are commonly used as energy sources. Typically, a battery includes a negative electrode (anode) and a positive electrode (cathode). The anode and cathode are often disposed in an electrolytic solution. During discharge of a battery, a chemical reaction can occur that oxidizes an active anode material and reduces an active cathode material. During the reaction, electrons flow from the anode to the cathode, and ions in the electrolytic solution flow between the anode and the cathode. Certain batteries can be recharged by running the chemical reaction in reverse.

One type of battery is a lead acid battery. In a lead acid battery, lead is usually an active anode material, and lead dioxide is usually an active cathode material. Generally, lead acid batteries also contain sulfuric acid, which serves as an electrolyte and participates in the chemical reaction. A typical discharge reaction for a lead acid battery reaction is:

$$\textit{Anode}: Pb(s) + HSO_4^-(aq) \rightarrow PbSO_4(s) + H^+ + 2e^-$$

$$\textit{Cathode}: \underline{PbO_2(s) + 3H^\pm(aq) + HSO_4^-(aq) + 2e^-} \rightarrow \underline{PbSO_4(s) + 2H_2O}$$

$$\textit{Net}: Pb(s) + PbO_2(s) + 2H^+(aq) + 2HSO_4^-(aq) \rightarrow 2PbSO_4(s) + 2H_2O$$

## SUMMARY

The invention relates to batteries, such as lead acid batteries, that contain fibrous material, as well as methods of making and using such batteries. Fibrous material refers to a material formed of fibers. A fiber refers to an entity having a ratio of length to diameter (i.e., aspect ratio) of at least five.

Applicant has discovered that fibrous material can be advantageously used in a battery to increase the amount of electrolyte contained in the battery relative to an otherwise substantially similar battery that does not contain the fibrous material. For example, in a lead acid battery where the electrolyte (e.g., sulfuric acid) is a reactant in the discharge reaction, increasing the amount of electrolyte present in the battery can increase the energy content of the battery. Some or all of the fibrous material can be disposed, for example, within a volume of the battery (e.g., the head space and/or fringe volume) that might not otherwise contain a material that is an electrolyte and/or reactant in the discharge reaction of the battery. Optionally, a portion of the fibrous material can be incorporated in one or more components of the battery, such as one or more separators, anode plates and/or cathode plates.

In one aspect, the invention features a battery that includes a case, a cell disposed within the case, and a fibrous material disposed within the case so that at least some of the fibrous material is between the cell and the case. The cell includes a plurality of plates and a plurality of separators. The plates and separators are arranged so that, for each pair of adjacent plates, one plate forms an anode plate and the other plate forms a cathode plate, and a separator is disposed between the anode plate and the cathode plate.

In another aspect, the invention features a process for manufacturing a battery having a case. The process includes combining a fibrous material with an electrolyte, and disposing the fibrous material and the electrolyte in the case of the battery.

In some embodiments, the fibrous material and the electrolyte form a mixture before being disposed in the case, and the process includes filtering the mixture to remove at least some of the fibrous material from the mixture before disposing the fibrous material and the electrolyte in the case. The electrolyte can disposed in the case before, after or at the same time as the fibrous material is disposed in the case. The case can be substantially devoid of any electrolyte before the electrolyte is disposed in the case.

In a further aspect, the invention features a process for manufacturing a battery having a case. The process includes constructing a cell in the case of the battery, and, after constructing the cell, disposing a fibrous filler in the case. The cell is formed of a plurality of plates and a plurality of separators. The plates and separators are arranged so that, for each pair of adjacent plates, one plate forms an anode plate and the other plate forms a cathode plate, and a separator is disposed between the anode plate and the cathode plate.

The process can further include disposing an electrolyte in the case. The electrolyte can be disposed in the case before, after or at the same time as the fibrous material is disposed in the case. The case can be substantially devoid of any electrolyte before the electrolyte is disposed in the case.

Embodiments of the invention can include one or more of the following aspects.

The battery can be, for example, a lead acid battery, such as a valve regulated lead acid battery of the absorbed glass mat type, a flooded valve regulated lead acid battery, or a gel valve regulated lead acid battery. The battery can further include sulfuric acid within the case. Some of the sulfuric acid can be adsorbed on the fibrous material, and some of the sulfuric acid can be adsorbed in the separators.

The battery can be, for example, a nickel metal hydride battery.

The fibrous material can have an acid absorption of at least 50%.

The fibrous material can be formed of, for example, a polymeric material or a siliceous material (e.g., C glass). In some embodiments, the fibrous material is an inorganic material. In certain embodiments, the fibrous material is an organic material. In some embodiments, some of the fibrous material is an inorganic material, and some of the fibrous material is an organic material.

In some embodiments, at least one weight percent of the fibrous material passes through a 10x10 mesh during the shake test. In certain embodiments, at least five weight percent of the fibrous material passes through a 8x8 mesh during the shake test. In some embodiments, at least five weight percent of the fibrous material passes through a 6x6 mesh during the shake test.

The fibrous material can be disposed in a gelling agent.

The fibrous material can be mixed with particles of a material, such as silica particles.

The fibrous material can have an average length of from 0.1 millimeter to 1.5 millimeters. The fibrous material can have an average diameter of less than 40 microns. The fibrous material can have an average aspect ratio of less than 1,500.

A portion of the fibrous material can be disposed in the battery head space. A portion of the fibrous material can be disposed in the battery fringe volume. At least some of the fibrous material can be adsorbed in at least one of the separators.

In some embodiments, a battery containing fibrous material (e.g., in the head space and/or fringe volume) can exhibit a higher energy content than an otherwise substantially similar battery that does not contain the fibrous material.

In certain embodiments, a battery containing fibrous material (e.g., in the head space and/or fringe volume) can exhibit reduced corrosion relative to an otherwise substantially similar battery that does not contain the fibrous material.

In some embodiments, a battery containing fibrous material (e.g., in the head space and/or fringe volume) can exhibit increased thermal conductivity relative to an otherwise substantially similar battery that does not contain the fibrous material.

Features, objects and advantages of the invention are in the description, drawings and claims.

## DESCRIPTION OF DRAWINGS

Fig. 1 is a partially cut away perspective view of an embodiment of a valve regulated lead acid battery of the absorbed glass mat type;

Fig. 2 is a cross-sectional view of an embodiment of a valve regulated lead acid battery of the absorbed glass mat type that contains fibrous material in its head space; and

Fig. 3 is a cross-sectional view of an embodiment of an apparatus for modifying the average length of an association of fibers.

## DETAILED DESCRIPTION

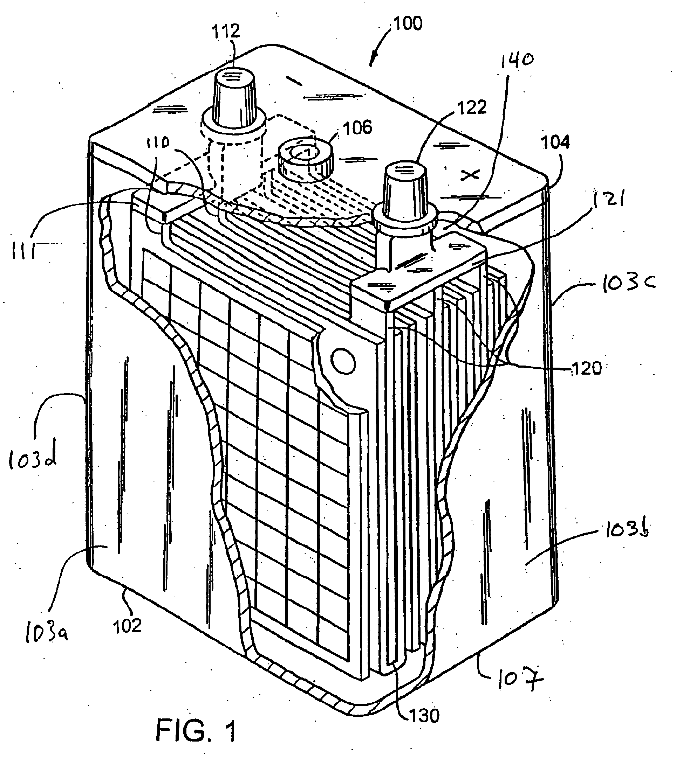

Fig. 1 shows a valve regulated lead acid battery 100 of the absorbed glass mat type. Battery 100 includes a case 102 having side walls 103a, 103b, 103c and 103d. Case 102 also has a bottom 107 and a cover 104 with a vent 106 disposed therein. Case 102 contains anode plates 110 connected to a negative terminal 112 via a strap 111, and cathode plates 120 connected to a positive terminal 122 via a strap 121. Separators 130 are disposed between adjacent anode and cathode plates 110 and 120, respectively. Case 102 also contains sulfuric acid (e.g., an aqueous sulfuric acid solution). Battery 100 has a volume 140 between cover 104 and the top of plates 110 and 120, referred to herein as the head space, is substantially devoid of solid or liquid material.

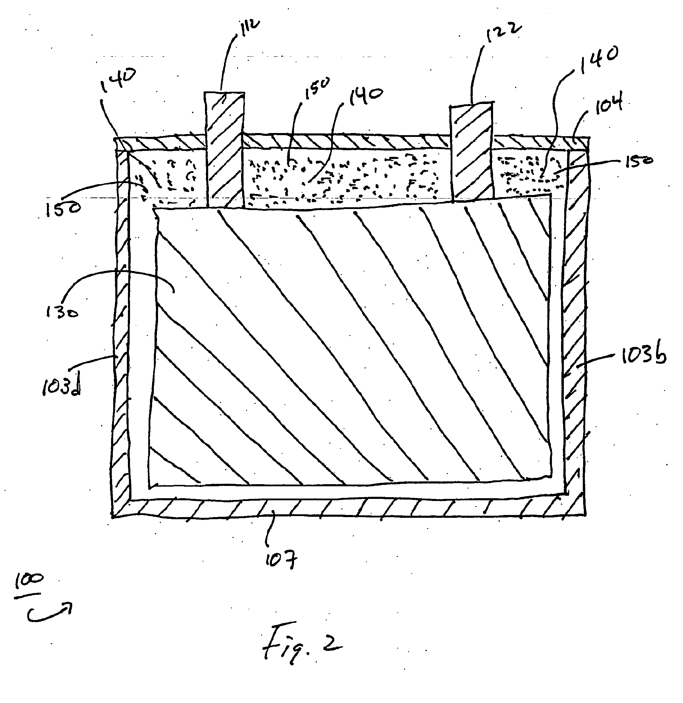

Fig. 2 shows an embodiment of battery 100 in which head space 140 contains a fibrous material 150. Typically, the fibrous material is capable of absorbing at least some electrolyte (e.g., sulfuric acid). For example, in some embodiments, the glass fibers have an acid absorption of at least 50% (e.g., at least 100%, at least 150%, at least 200%, at least 250%, at least 300%, at least 350%, at least about 400%, at least about 450%, at least about 500%, at least about 550%, at least about 600%, at least about 650%, at least about 700%, at least about 750%, at least about 800%, at least about 850%, at least about 900%, at least about 950%, at least about 1,000%, at least about 1,050%, at least about 1,100%, at least about 1,200%, at least about 1,250%, at least about 1,300%, at least about 1,350%, at least about 1,400%, at least about 1,450%, at least about 1,500%, at least about 1,550%, at least about 1,600%).

The acid absorption of a sample of a fibrous material is measured as follows. One gram of the fibrous material is placed in a dish (e.g., a petri dish). An amount of 1.28 specific gravity sulfuric acid sufficient to wet and cover the fibrous material is placed on the fibrous material. The fibrous material is soaked in the sulfuric acid for five minutes. The fibrous material is removed from the sulfuric acid, placed on a screen and drained for one minute. The mass of the fibrous material is then measured to determine the wet mass of the fibrous material. The acid absorption is determined by the following equation.

$$\text{Acid absorption} = ((\text{wet mass in grams} - \text{one gram})/(\text{one gram}))*(100\%)$$

Without wishing to be bound by theory, it is believed that including fibrous material capable of absorbing sulfuric acid in the head space of a lead acid battery can increase the amount of sulfuric acid that can be contained within the battery relative to a substantially similar lead acid battery that does not contain fibrous material in its head space because the fibrous material can be used to contain additional sulfuric acid beyond what is contained in the otherwise substantially similar lead acid battery that does not contain fibrous material in its head space. Further, because the sulfuric acid is a reactant in the discharge reaction of a lead acid battery, it is believed that including the fibrous material in the head space of a lead acid battery can result in a battery with a higher energy content than an otherwise substantially similar lead acid battery that does not contain fibrous material in its head space.

It is also believed that including a fibrous material capable of absorbing sulfuric acid in the head space of a lead acid battery can reduce the corrosion of certain components of the battery located within the head space (e.g., the straps that connect the plates to their respective terminals) relative to a substantially similar lead acid battery that does not contain the fibrous material in its head space because the components can tend to have a lower rate of corrosion when contacting the sulfuric acid-containing fibrous material than when contacting air. It is believed that, by reducing the corrosion rate of the components, the components can be made of lower grade materials (e.g., relatively impure pure lead materials), which can reduce the cost of making the battery, reduce the complexity of making the battery, and/or increase the useful lifetime of the battery.

It is further believed that including a fibrous material capable of absorbing sulfuric acid in the head space of a lead acid battery can increase heat conduction between the battery case and the plates/separators relative to a substantially similar lead acid battery that does not contain the fibrous material in its head space because, in general, the sulfuric acid-containing fibrous material conducts heat better than air conducts heat. It is believed that, by increasing the conduction of heat between the battery case and the plates/separators, the battery can operate at lower temperatures, which can reduce the cost of maintaining the battery, reduce the complexity of maintaining the batter, increase the efficiency of the battery, and/or increase the useful life of the battery.

In certain embodiments, the amount of fibrous material 150 (and associated sulfuric acid) used can determined based upon the bulk density of fibrous material 150. In particular, assuming that the volume of head space 140 is known, the mass of fibrous material 150 that can be disposed in head space 140 can be determined based on the bulk density of fibrous material 150. Further, the amount of sulfuric acid that can be disposed in head space 140 (associated with fibrous material 150) can be determined based on the acid absorption of fibrous material 150. Accordingly, the bulk density of fibrous material 150 can be selected depending upon the volume of head space 140, the amount of additional sulfuric acid desired (associated with fibrous material 150), and the acid absorption of fibrous material 150. In general, the bulk density of fibrous material 150 depends upon the average length and average diameter of fibrous material.

In some embodiments, the fibrous material is formed of one or more siliceous materials. While various types of glass fibers can be used, typically the glass fibers are relatively inert to lead acid battery storage and use conditions. In some embodiments, at least some (e.g., all) of the glass fibers contain a relatively small amount (e.g., less than one weight percent, less than 0.5 weight percent, less than 0.1 weight percent) of barium and/or zinc compounds (e.g., barium oxide, zinc oxide). In certain embodiments, at least some (e.g., all) of the glass fibers are formed of a type of glass commonly referred to as C glass.

Glass fibers are commercially available from, for example, Owens Corning (Toledo, OH), Johns Manville (Denver, CO), PPG (Pittsburgh, PA), Nippon Sheet Glass (Tokyo, Japan), Evanite Fiber Corporation (Corvallis, OR), and Hollingsworth & Vose Company (East Walpole, MA). Examples of commercially available glass fibers include PA-01 glass fibers (Hollingsworth & Vose), PA-10 glass fibers (Hollingsworth & Vose Company), PA-20 glass fibers (Hollingsworth & Vose Company), Evanite 408 glass fibers (Evanite Fiber Company), Evanite 609 glass fibers (Evanite Fiber Company), Evanite 610 MB glass fibers (Evanite Fiber Company), Evanite 719 glass fibers (Evanite Fiber Company), Famix 1103-B 1 glass fibers (distributed by, for example, Osthoff-Petrasch, Norderstedt, Germany), Famix 1103-D1 glass fibers (distributed by, for example, Osthoff-Petrasch), Famix 1107-B1 glass fibers (distributed by, for example, Osthoff-Petrasch), Famix 1107-D1 glass fibers (distributed by, for example, Osthoff-Petrasch), and Famix 1203-B1 glass fibers (distributed by, for example, Osthoff-Petrasch).

In some embodiments, it is advantageous for the fibrous material to have good flow characteristics. For example, this can reduce the cost and/or complexity of assembling the battery (see discussion below).

Table I shows flow characteristics of fibrous materials formed of glass fibers having different average lengths. The average length of the PA-10 was 359 microns, and the average length of the PA-20 was 154 microns. The data in Table I was measured by: placing a given weight of a sample of glass fibers on a mesh having a given size; shaking the sample for five minutes at 42 Hz using a Syntron shaker; and weighing the amount of the glass fibers that passed through the screen. This test is referred to herein as the shake test.

Table I

| Fibers | Mesh Size | Sample Wt | Wt Passed | % Sample Passed |
|--------|-----------|-----------|-----------|-----------------|
| PA-01 | 6x6 | 5.047 g | 0.002 g | 0.04 |
| PA-01 | 4x4 | 5.087 g | 0.005 g | 0.10 |
| PA-10 | 10x10 | 5.052 g | 0.091 g | 1.80 |
| PA-10 | 8x8 | 5.038 g | 0.759 g | 15.07 |
| PA-10 | 6x6 | 5.053 g | 4.161 g | 82.35 |
| PA-10 | 4x4 | 5.045 g | 4.243 g | 84.10 |
| PA-10 | 4x4 | 5.098 g | 4.558 g | 89.41 |
| PA-20 | 10x10 | 5.098 g | 3.777 g | 74.09 |
| PA-20 | 8x8 | 5.053 g | 4.538 g | 89.81 |
| PA-20 | 6x6 | 5.045 g | 4.307 g | 85.37 |

In certain embodiments, at least one weight percent (e.g., at least two weight percent, at least five weight percent, at least 10 weight percent, at least 15 weight percent, at least 20 weight percent, at least 30 weight percent, at least 40 weight percent, at least 50 weight percent, at least 60 weight percent, at least 70 weight percent) of the glass fibers pass through a 10x10 mesh during the shake test.

In some embodiments, at least five weight percent (e.g., at least 10 weight percent, at least 15 weight percent, at least 20 weight percent, at least 30 weight percent, at least 40 weight percent, at least 50 weight percent, at least 60 weight percent, at least 70 weight percent, at least 80 weight percent, at least 90 weight percent) of the glass fibers pass through an 8x8 mesh during the shake test.

In certain embodiments, at least five weight percent (e.g., at least 10 weight percent, at least 15 weight percent, at least 20 weight percent, at least 30 weight percent, at least 40 weight percent, at least 50 weight percent, at least 60 weight percent, at least 70 weight percent, at least 80 weight percent, at least 90 weight percent) of the glass fibers pass through a 6x6 mesh during the shake test.

In certain embodiments, at least five weight percent (e.g., at least 10 weight percent, at least 15 weight percent, at least 20 weight percent, at least 30 weight percent, at least 40 weight percent, at least 50 weight percent, at least 60 weight percent, at least 70 weight percent, at least 80 weight percent, at least 90 weight percent) of the glass fibers pass through a 4x4 mesh during the shake test.

As indicated in Table I, in some embodiments, flow characteristics of a fibrous material can improve as the average length of the fiber is reduced.

In certain embodiments, the glass fibers have an average length of less than 1.5 millimeters (e.g., less than 1.4 millimeters, less than 1.3 millimeters, less than 1.2 millimeters, less than 1.1 millimeters, less than one millimeter, less than 0.975 millimeter, less than 0.950 millimeter, less than 0.925 millimeter, less than 0.900 millimeter, less than 0.875 millimeter, less than 0.850 millimeter, less than 0.825 millimeter, less than 0.800 millimeter, less than 0.775 millimeter, less than 0.750 millimeter, less than 0.725 millimeter, less than 0.700 millimeter, less than 0.675 millimeter, less than 0.650 millimeter, less than 0.625 millimeter, less than 0.600 millimeter, less than 0.575 millimeter, less than 0.550 millimeter, less than 0.525 millimeter, less than 0.500 millimeter, less than 0.475 millimeter, less than 0.450 millimeter, less than 0.425 millimeter, less than 0.400 millimeter, less than 0.375 millimeter, less than 0.350 millimeter, less than 0.325 millimeter, less than 0.300 millimeter, less than 0.275 millimeter, less than 0.250 millimeter, less than 0.225 millimeter, less than 0.200 millimeter, less than 0.175 millimeter, less than 0.150 millimeter, less than 0.125 millimeter, less than 0.100 millimeter) and/or an average length of at least-0.100 millimeter (e.g.; at least 0.125 millimeter, at least 0.150 millimeter, at least 0.175 millimeter, at least 0.200 millimeter, at least 0.225 millimeter, at least 0.250 millimeter, at least 0.275 millimeter, at least 0.300 millimeter, at least 0.325 millimeter, at least 0.350 millimeter, at least 0.375 millimeter, at least 0.400 millimeter, at least 0.425 millimeter, at least 0.450 millimeter, at least 0.475 millimeter, at least 0.500 millimeter).

The average length of a sample of fibers is determined as follows. The fibers are placed on a slide and the fiber lengths are measured by visual inspection using a Leica DMLS microscope with a video camera (Meyer Instruments, Inc., Houston, Texas) using a magnification of from 20X to 200X. The average length is then calculated as the arithmetic mean of the measured fibers lengths.

In some embodiments, the glass fibers have an average diameter of less than 40 microns (e.g., less than 35 microns, less than 30 microns, less than 25 microns, less than 20 microns, less than 15 microns, less than 10 microns, less than five microns, less than three microns, less than 2.9 microns, less than 2.75 microns, less than 2.5 microns, less than 2.25 microns, less than 2.5 microns, less than 2.25 microns, less than two microns, less than 1.75 microns, less than 1.5 microns, less than 1.25 microns, less than one micron) and/or an average diameter of at least one micron (e.g., at least 1.25 microns, at least 1.5 microns, at least 1.75 microns, at least two microns, at least 2.25 microns, at least 2.5 microns, at least 2.75 microns, at least three microns, at least 3.5 microns, at least four microns) (1 micron equals 1 $\mu$m). In certain embodiments, the glass fibers have an average diameter of from 0.7 microns to 6.25 microns (e.g., 0.9 microns, 1.35 microns, 2.9 microns, 2.8 microns, 6.1 microns).

The average diameter of a sample of fibers is determined by the BET method using argon gas.

In certain embodiments, the glass fibers have an average aspect ratio of less than 1,500 (e.g., less than 1400, less than 1,300, less than 1,200, less than 1,100, less than 1,000, less than less than 900, less than 800, less than 700, less than 600, less than 500, less than 400, less than 300) and/or an average aspect ratio of at least about five (e.g., at least 10, at least 50, at least 60, at least 70, at least 80, at least 90, at least 100, at least 110, at least 120, at least 130, at least 140, at least 150, at least 160, at least 170, at least 180, at least 190, at least 200, at least 250, at least 300, at least 350, at least 400).

The average aspect ratio of a sample of fibers refers to the ratio of the average length of the sample of fibers to the average diameter of the sample of fibers.

In some embodiments, more than six weight percent (e.g., at least seven weight percent, at least eight weight percent, at least nine weight percent, at least 10 weight percent, at least 11 weight percent, at least 12 weight percent, at least 13 weight percent at least 14 weight percent) of a fibrous material can be lost during the hand sheet test. The hand sheet test is performed as follows. A fibrous material is placed in a Hamilton Beach seven speed blender, and 550 milliliters of deionized (reverse osmosis) water is added to the blender. An amount of aqueous sulfuric acid (22 volume percent sulfuric acid) is added to the blender so that the mixture obtain a pH of 2.8. The blender is set to high and blended for 10 seconds. The blended mixture is poured into a TAPPI semiautomatic hand sheet mold with a 150 mesh screen, and the mold is turned on so that the blended mixture is formed into a hand sheet on the 150 mesh screen. The mold is then turned off, and the hand sheet is couched from the 150 mesh screen using 6.5 pounds per square inch pressure. The hand sheet is rolled five times using a 25 pound roller, and then put in an oven at 187°C until dry. The mass of the dried hand sheet is then measured. The percent weight loss is the ratio of the mass of the dried hand sheet to the initial mass of the fibrous material times 100%.

In general, the glass fibers can be prepared using various techniques. In some embodiments, glass fibers are prepared by reducing the average length of relatively long fibers. The relatively long fibers can have an average length of, for example, at least five millimeters (e.g., at least 7 millimeters, at least 10 millimeters, at least 15 millimeters, at least 20 millimeters). For example, the glass fibers can be prepared by crushing longer fibers using the following procedure. A bale of relatively long glass fibers is put into a container, and a pressure (e.g., at least 50 pounds per square inch (3,48 bar), at least 75 pounds per square inch (5,17 bar), at least 100 pounds per square inch (6.86 bar), at least 125 pounds per square inch (8.62 bar), at least 150 pounds per square inch (10.34 bar), at least 175 pounds per square inch (12.06 bar), at least 200 pounds per square inch (13.79 bar)) is applied to the fibers to crush the fibers for a certain period time (e.g., at least one second, at least two seconds, at least three seconds, at least four seconds, at least five seconds, at least six seconds, at least seven seconds, at least eight seconds, at least nine seconds, at least 10 seconds). The crushing step is repeated as many times as desired (e.g., one time, two times, three times, four times, five times, six times, seven times, eight times, nine times, 10 times, 11 times, 12 times) until the fibers have the desired average length. In certain embodiments, the bale is rotated through an angle (e.g., five degrees, 10 degrees, 20 degrees, 30 degrees, 40 degrees, 50 degrees, 60 degrees, 70 degrees, 80 degrees, 90 degrees) between one or more of the crushing steps (e.g., between each crushing step, between every other crushing step).

In some embodiments, the ratio of the average length of an association of glass fibers before crushing to the average length of the association of glass fibers after crushing can be at least 15 (e.g., at least 20, at least 25, at least 30, at least 35, at least 40, at least 45, at least 50, at least 75, at least 100, at least 200, at least 250) and/or less than 500 (e.g., less than 250, less than 200).

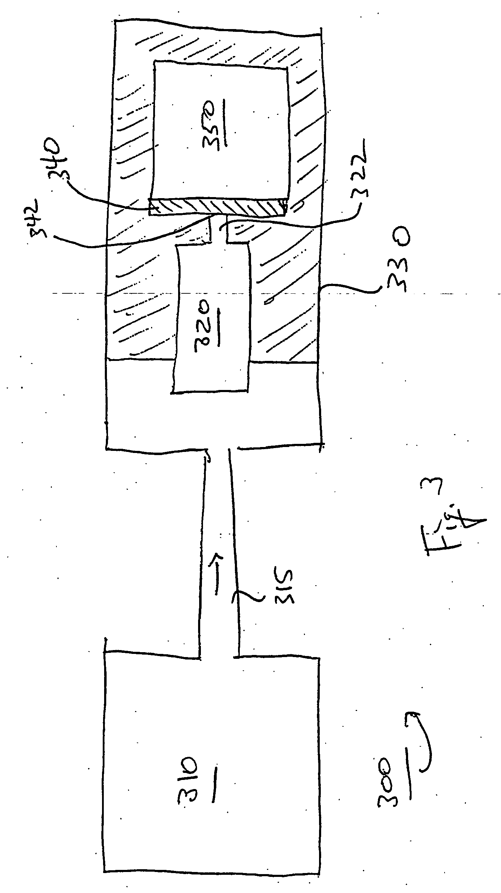

Fig. 3 is a cross-sectional view of an apparatus 300 for forming the glass fibers. Apparatus has a compressor (e.g., a hydraulic compressor) 310 that exerts a pressure (e.g., at least 500 pounds per square inch (34,47 bar), at least 1,000 pounds per square inch (68,95 bar), at least" 1,500 pounds per square inch (103.42 bar), at least 1,750 pounds per square inch (120.66 bar)). Compressor 310 is in fluid communication with a cylinder (e.g., a hydraulic cylinder) 320 via a conduit 315. Cylinder 320 is disposed within a housing 330 and includes a ram 322 that is used to transfer the pressure from cylinder 320 to a portion of a surface 342 of a platen 340. Platen 340, in turn, exerts a pressure against the contents (e.g., a bale of glass fibers) disposed within an opening 350 in housing 330. Typically, the platen 340, ram 322 and cylinder 320 are configured so that the pressure exerted by platen 340 against the contents of opening 350 is less than the pressure exerted by compressor 310 against cylinder wall 322. For example, the pressure exerted by platen 340 against the contents of opening 350 can be less than 90% (e.g., less than 80%, less than 70%, less than 60%, less than 50%, less than 40%, less than 30%, less than 20%, less than 10%) of the pressure exerted by compressor 310 along cylinder wall 322.

During use of system 300, a bale of glass fibers is disposed in opening 350; ram 322 exerts a pressure against platen surface 342; and the pressure from platen 340 is exerted against the glass fibers in opening 350 for a given period of time. In certain embodiments, this step is repeated with or without rotation of the bale between steps of applying pressure to the bale. In embodiments in which the step of applying pressure is repeated, the pressures used can be varied for different pressure application steps, or they can be substantially the same in each pressure application step.

Anode plates 110 and cathode plates 120 can be formed of conventional lead acid battery electrode materials. In general, anode plates 110 contains lead, and cathode plates 120 contain lead dioxide. Plates 110 and/or 120 can also contain one or more reinforcing materials, such as chopped organic fibers (e.g., having an average length of 0.125 inch (3.2 mm) or more), metal sulfate(s) (e.g., nickel sulfate, copper sulfate), red lead (e.g., a $Pb_3O_4$-containing material), litharge, paraffin oil, and/or expander(s). Generally, an expander contains barium sulfate, carbon black and lignin sulfonate as the primary components. The components of the expander(s) can be pre-mixed or non pre-mixed. Expanders are commercially available from, for example, Hammond Lead Products (Hammond, IN) and Atomized Products Group, Inc (Garland, TX). An example of a commercially available expander is Texex® expander (Atomized Products Group, Inc., Garland, TX). In certain embodiments, the expander(s), metal sulfate(s) and/or paraffin are present in anode plates 110, but not cathode plates 120. Optionally, anode plates 110 and/or cathode plates 120 can contain the fibrous material described herein.

Separators 130 can be formed of conventional lead acid battery separator materials. In some embodiments, separators 130 can be formed of glass fibers (e.g., a mat of glass fibers) that contains electrolyte (e.g., sulfuric acid).

In general, battery 100 can be assembled using any desired technique.

In some embodiments, battery 100 is generally assembled as follows. Anode plates 110, cathode plates 120 and separators 130 are assembled in case 102 using conventional lead acid battery assembly methods. Sulfuric acid is then disposed in case 102, followed by addition of fibrous material to head space 140. Cover 104 is then put in place, and terminals 112 and 122 are added. The amount of sulfuric acid that is disposed within case 102 is sufficient to properly wet separators 130 and also to wet the fibrous material located in head space 140. This method can be advantageous because the battery is assembled using standard methods, except for the addition of the fibrous material subsequent to the addition of the sulfuric acid.

In certain embodiments, the procedure noted in the preceding paragraph is used to assemble battery 100, except that the fibrous material is disposed in the head space prior to the addition of the sulfuric acid.

In some embodiments, battery 100 is generally assembled as follows. Anode plates 110, cathode plates 120 and separators 130 are assembled in case 102 using conventional lead acid battery assembly methods. Sulfuric acid is then mixed with the fibrous material to wet, and optionally saturate, the fibrous material. The sulfuric acid/fibrous material mixture is then filtered, and the sulfuric acid is then disposed in case 102, followed by addition of fibrous material to head space 140. Cover 104 is then put in place, and terminals 112 and 122 are added. The amount of sulfuric acid that is disposed within case 102 is sufficient to properly wet separators 130. This method can be advantageous because the battery is assembled using standard methods, except for the addition of the formation and filtering of the sulfuric acid and fibrous material. But, an advantage of this method is that, by pre-wetting the fibrous material, additional sulfuric acid beyond what is used to wet separators 130 need not be added to case 102.

In certain embodiments, the procedure noted in the preceding paragraph is used to assemble battery 100, except that the sulfuric acid and fibrous material are not filtered before being added to the battery case. In such embodiments, separators 130 can filter the fibrous material, thereby forming a mat in the head space.

The following examples are illustrative only and not intended as limiting.

Example 1

50 pounds (22.7 kg) of glass fibers were prepared as follows.

50 pounds (22.7 kg) of PA-01 glass fibers (Hollingsworth & Vose Company) were formed into a bale. The bale was put into an apparatus as described above (1800 pounds per square inch (124 bar) exerted by compressor, eight inch (200 mm) diameter hydraulic cylinder, four inch (100 mm) diameter ram, 19 inch (480 mm) by 25 inch (635 mm) platen), and a pressure of 190 pounds per square inch (13 bar) was applied to the fibers for five seconds. The pressure was removed, and the bale was rotated 90 degrees. A pressure of 190 pounds per square inch (13 bar) was again applied to the fibers for five seconds. The resulting glass fibers had an average length of 359 microns and an acid absorption of 1,097%. Five samples of the resulting glass fibers had an average weight loss of 13.85% according to the hand sheet test, whereas five samples of PA-01 glass fibers had an average weight loss of 5.15% according to the hand sheet test.

Example 2

50 pounds (22.7 kg) of glass fibers were prepared according to the method described in Example 1, except that the steps of applying a pressure of 190 pounds per square inch (13 bar) for five seconds and rotating the fiber 90 degrees between presses was repeated a total of six times. The resulting glass fibers had an average length of 183 $\mu$m and an acid absorption of 292%.

Example 3

50 pounds (22.7 kg) of glass fibers were prepared according to the method described in Example 1, except that the steps of applying a pressure of 190 pounds per square inch (13 bar) for five seconds and rotating the fiber 90 degrees between presses was repeated a total of nine times. The resulting glass fibers had an average length of 154 $\mu$m and an acid absorption of 237%.

Example 4

50 pounds (22.7 kg) of glass fibers were prepared according to the method described in Example 1, except that: 1.) Evanite 408 glass fibers (Evanite Fiber Corporation), having an average fiber length of 387 microns and an average fiber diameter of 0.87 microns, were used; and 2.) that the steps of applying a pressure of 190 pounds per square inch (13 bar) for five seconds and rotating the fiber 90 degrees between presses was repeated a total of three times. The resulting fibers had an average length of 150 $\mu$m and an acid absorption of 1,845%.

Example 5

50 pounds (22.7 kg) of glass fibers were prepared according to the method described in Example 4, except that the steps of applying a pressure of 190 pounds per square inch (13 bar) for five seconds and rotating the fiber 90 degrees between presses was repeated a total of six times. The resulting fibers had an average length of 132 $\mu$m and acid absorption of 1,577%.

Example 6

50 pounds (22.7 kg) of glass fibers were prepared according to the method described in Example 4, except that the steps of applying a pressure of 190 pounds per square inch (13 bar) for five seconds and rotating the fiber 90 degrees between presses was repeated a total of nine times. The resulting fibers had an average length of 112 $\mu$m and an acid absorption of 1,091%.

Example 7

50 pounds (22.7 kg) of glass fibers were prepared according to the method described in Example 4, except that the steps of applying a pressure of 190 pounds per square inch (13 bar) for five seconds and rotating the fiber 90 degrees between presses was repeated a total of 12 times. The resulting fibers had an average length of 115 $\mu$m and an acid absorption of 742%.

Examples 8

50 pounds (22.7 kg) of glass fibers were prepared according to the method described in Example 1, except that: 1.) Evanite 609 glass fibers (Evanite Fiber Corporation), having an average fiber length of 258 microns and an average fiber diameter of 1.35 microns, were used; and 2.) that the steps of applying a pressure of 190 pounds per square inch (13 bar) five seconds and rotating the fiber 90 degrees between presses was repeated a total of three times. The resulting fibers had an average length of 148 $\mu$m and an acid absorption of 1,274%.

Example 9

50 pounds (22.7 kg) of glass fibers were prepared according to the method described in Example 8, except that the steps of applying a pressure of 190 pounds per square inch (13 bar) for five seconds and rotating the fiber 90 degrees between presses was repeated a total of six times. The resulting fibers had an average length of 125 $\mu$m and an acid absorption of 901%.

Example 10

50 pounds (22.7 kg) of glass fibers were prepared according to the method described in Example 8, except that the steps of applying a pressure of 190 pounds per square inch (13 bar) for five seconds and rotating the fiber 90 degrees between presses was repeated a total of nine times. The resulting fibers had an average length of 108 $\mu$m and an acid absorption of 665%.

Example 11

Glass fibers were prepared according to the method described in Example 8, except that the steps of applying a pressure of 1800 pounds per square inch (124 bar) for five seconds and rotating the fiber 90 degrees between presses wa repeated a total of 12 times. The resulting fibers had an average length of 102 $\mu$m and an acid absorption of 430%.

Examples 12-22

A valve regulated lead acid battery of the absorbed mat type is assembled as follows. The anode plates, cathode plates and separators are assembled in a battery case using conventional lead acid battery assembly methods. Sulfuric acid is then disposed in the battery case, followed by addition of fibrous material to the battery head space. The battery cover is then put in place, and the terminals are added. The amount of sulfuric acid that is disposed within the case is sufficient to properly wet the separators and also to wet the fibrous material located in the head space.

Table II lists the material used for the fibrous material in the batteries of Examples 12-22

Table II

| Example | Fibrous Material |
|---------|------------------|
| 12 | Glass fibers of Example 1 |
| 13 | Glass fibers of Example 2 |
| 14 | Glass fibers of Example 3 |
| 15 | Glass fibers of Example 4 |
| 16 | Glass fibers of Example 5 |
| 17 | Glass fibers of Example 6 |
| 18 | Glass fibers of Example 7 |
| 19 | Glass fibers of Example 8 |
| 20 | Glass fibers of Example 9 |
| 21 | Glass fibers of Example 10 |
| 22 | Glass fibers of Example 11 |

Examples 23-33

Examples 12-22 are repeated, except that the fibrous material is disposed in the battery case before the sulfuric acid is added.

Examples 34-44

A valve regulated lead acid battery of the absorbed mat type is assembled as follows. Anode plates, cathode plates and separators are assembled in a battery case using conventional lead acid battery assembly methods. Sulfuric acid is then mixed with fibrous material to saturate the fibrous material. The sulfuric acid/fibrous material mixture is then filtered, and the sulfuric acid is then disposed in the battery case, followed by addition of fibrous material to the battery head space. The cover is then put in place, and the terminals are added. The amount of sulfuric acid that is disposed within the battery case is sufficient to properly wet the separators, but, because the fibrous material is pre-saturated, additional sulfuric acid beyond what is used to wet the separators is not added.

Table III lists the material used for the fibrous material in the batteries of Examples 34-44.

Table III

| Example | Fibrous Material |
|---------|------------------|
| 34 | Glass fibers of Example 1 |
| 35 | Glass fibers of Example 2 |
| 36 | Glass fibers of Example 3 |
| 37 | Glass fibers of Example 4 |
| 38 | Glass fibers of Example 5 |
| 39 | Glass fibers of Example 6 |
| 40 | Glass fibers of Example 7 |
| 41 | Glass fibers of Example 8 |
| 42 | Glass fibers of Example 9 |
| 43 | Glass fibers of Example 10 |
| 44 | Glass fibers of Example 11 |

Examples 45-55

Examples 23-33 are repeated, except that the mixture of sulfuric acid and fibrous is not filtered before being added to the battery case.

Example 56

50 pounds (22.7 kg) of glass fibers were prepared as follows.

50 pounds (22.7 kg) of Evanite 408 glass fibers (Evanite Fiber Corporation) were formed into a bale. The bale was put into an apparatus as described above (1800 pounds per square inch (124 bar) exerted by compressor, eight inch (200 mm) diameter hydraulic cylinder, four inch (100 mm) diameter ram, 19 inch (480 mm) by 25 inch (635 mm) platen), and a pressure of 190 pounds per square inch (13 bar) was applied to the fibers for five seconds. The pressure was removed, and the bale was rotated 90 degrees. A pressure of 190 pounds per square inch (13 bar) was again applied to the fibers for five seconds. This process of applying pressure and rotating 90 degrees was repeated an additional 10 times. Three samples of glass fibers prepared by this process had an average bulk density of 5.1 pounds per cubic foot (0.082 gcm$^{-3}$).

Example 57

50 pounds (22.7 kg) of glass fibers were prepared according to the method described in Example 56, except that the steps of applying a pressure of 190 pounds per square inch (13 bar) for five seconds and rotating the fiber 90 degrees between presses was repeated a total of nine times. Three samples of glass fibers prepared by this process had an average bulk density of 3.5 pounds per cubic foot (0.056 gcm$^{-3}$).

Example 58

50 pounds (22.7 kg) of glass fibers were prepared according to the method described in Example 56, except that the glass fibers were 609 glass fibers (Evanite), and the steps of applying a pressure of 190 pounds per square inch (13 bar) for five seconds and rotating the fiber 90 degrees between presses was repeated a total of 12 times. Three samples of glass fibers prepared by this process had an average bulk density of 5.1 pounds per cubic foot (0.082 gcm$^{-3}$).

Example 58

50 pounds (22.7 kg) of glass fibers were prepared according to the method described in Example 58, except that the steps of applying a pressure of 190 pounds per square inch (13 bar) for five seconds and rotating the fiber 90 degrees between presses was repeated a total of nine times. Three samples of glass fibers prepared by this process had an average bulk density of 3.6 pounds per cubic foot ($0.058$ gcm$^{-3}$).

Example 59

50 pounds (22.7 kg) of glass fibers were prepared according to the method described in Example 58, except that the steps of applying a pressure of 190 pounds per square inch (13 bar) for five seconds and rotating the fiber 90 degrees between presses was repeated a total of six times. Three samples of glass fibers prepared by this process had an average bulk density of 3.7 pounds per cubic foot ($0.059$ gcm$^{-3}$).

Example 60

50 pounds (22.7 kg) of glass fibers were prepared as described in Example 1. Three samples of the resulting glass fibers had an average bulk density of 5.0 pounds per cubic foot ($0.080$ gcm$^{-3}$).

Example 61

50 pounds (22.7 kg) of glass fibers were prepared as described in Example 1. Three samples of the resulting glass fibers had an average bulk density of 5.1 pounds per cubic foot ($0.082$ gcm$^{-3}$).

Example 62

50 pounds (22.7 kg) of glass fibers were prepared as follows.
50 pounds (22.7 kg) of PA-10 glass fibers (Hollingsworth & Vose Company) were formed into a bale. The bale was put into an apparatus as described above (1800 pound per square inch (124 bar) exerted by compressor, eight inch (200 mm) diameter hydraulic cylinder, four inch (100 mm) diameter ram, 19 inch (480 mm) by 25 inch (635 mm) platen), and a pressure of 190 pounds per square inch (13 bar) was applied to the fibers for five seconds. The pressure was removed, and the bale was rotated 90 degrees. A pressure of 190 pounds per square inch (13 bar) was again applied to the fibers for five seconds. Three samples of the resulting glass fibers had an average bulk density of 5.1 pounds per cubic foot ($0.082$ gcm$^{-3}$).

Example 62

50 pounds (22.7 kg) of glass fibers were prepared according to the method described in Example 61, except that the steps of applying a pressure of 190 pounds per square inch (13 bar) for five seconds and rotating the fiber 90 degrees between presses was repeated a total of six times. Three samples of glass fibers prepared by this process had an average bulk density of 11.4 pounds per cubic foot ($0.183$ gcm$^{-3}$).

Example 62

50 pounds (22.7 kg) of glass fibers were prepared according to the method described in . Example 61, except that the steps of applying a pressure of 190 pounds per square inch (13 bar) for five seconds and rotating the fiber 90 degrees between presses was repeated a total of nine times. Three samples of glass fibers prepared by this process had an average bulk density of 14.0 pounds per cubic foot ($0.224$ gcm$^{-3}$).
While certain embodiments have been described, the invention is not limited to these embodiments.
As an example, in general, the fibers can be formed of any desired material. For example, the fibers can be siliceous fibers or non-siliceous fibers, synthetic fibers or nonsynthetic fibers, organic fibers or inorganic fibers, polymeric fibers or nonpolymeric fibers, coated fibers or substantially noncoated fibers, hollow fibers or substantially nonhollow fibers, porous fibers or substantially nonporous fibers, metallic fibers or nonmetallic fibers, or combinations thereof. Examples of types of polymeric fibers include substituted polymers, unsubstituted polymers, saturated polymers, unsaturated polymers (e.g., aromatic polymers), organic polymers, inorganic polymers, straight chained polymers, branched polymers, homopolymers, copolymers, and combinations thereof. Examples of polymer fibers include polyalkylenes (e.g., polyethylene, polypropylene, polybutylene), polyesters (e.g., polyethylene terephthalate), polyamides (e.g., nylons, aramids), halogenated polymers (e.g., teflons) and combinations thereof. Examples of other types of fibers include metallic fibers (e.g., fibers formed of materials containing transition metals or transition metal alloys), ceramic fibers (e.g., fibers formed of materials containing one or more metal oxides, such as titanate fibers), metal coated fibers, alloy coated fibers, sulfide fibers, carbon fibers (e.g., graphite fibers), and combinations thereof. Examples of some commercially available non-siliceous fibers include the Short Stuff® family of polyethylene fibers, including ESS5F, ESS2F, E380F, E400F, E780F, E990F, ESS5M, ESS2M, E400M, E780M, E990M, ESS50F, E385F, and E795F (distributed by, for example, MiniFibers, Inc., Johnson City, TN). Additional examples of some commercially available non-siliceous fibers include the Short Stuff® family of polypropylene fibers, including Y600F, Y600M (distributed by, for example, MiniFibers, Inc.).

As another example, the fibers can be made by various processes. In some embodiments, the fibers are made by hammermilling into a desired size, commonly referred to as milled fibers. Such fibers are commercially available from, for example, Owens-Corning (e.g., 731EC, 731ED, 737BC, 737BD, 739DC and 739DD). In some embodiments, milled fibers can have an average length of about 16 microns. In certain embodiments, the fibers can be cut to a desired size. In some embodiments, the fibers can be chopped into a desired size. Examples of some commercially available chopped fibers include the above-noted members of the Famix family of fibers. In some embodiments, combinations of processes can be used to manufacture the fibers.

As another example, at least some (e.g., all) of the glass fibers can be substantially noncoated. A substantially noncoated fiber means a fiber which, prior to being incorporated into anode material 114 or cathode material 124, has a coating (e.g., a metal coating, a metal oxide coating, an alloy coating) on less than 90 percent (e.g., less than 80 percent, less than 70 percent, less than 60 percent, less than 50 percent, less than 40 percent, less than 30 percent, less than 20 percent, less than 10 percent, less than five percent, less than four percent, less than three percent, less than two percent, less than one percent) of its surface.

As a further example, at least some (e.g., all) of the glass fibers can be substantially nonhollow. A substantially nonhollow fiber, as referred to herein, means a fiber which has an internal volume that is at least 10 percent (e.g., at least 20 percent, at least 30 percent, at least 40 percent, at least 50 percent, at least 60 percent, at least 70 percent, at least 80 percent, at least 90 percent, at least 95 percent, at least 96 percent, at least 97 percent, at least 98 percent, at least 99 percent) solid.

As an additional example, at least some (e.g., all) of the glass fibers can be substantially nonporous. A substantially nonporous fiber, as referred to herein, means a fiber which has a surface with less than 95 percent (e.g., less than 90 percent, less than 80, less than 70 percent, less than 60 percent, less than 50 percent, less than 40 percent, less than 30 percent, less than 10 percent) formed of pores.

As another example, in general, the fibrous material can be present in any desired portion of the battery. In some embodiments, the fibrous material can be present in one or more anode plates, one or more cathode plates and/or one or more separators. In certain embodiments, the fibrous material can be present in the volume of the battery between the sides and bottom of the anode plates and cathode plates, referred to herein as the fringe volume.

As a further example, the fibrous material can be used in any desired battery, such as, for example, flooded valve regulated lead acid batteries, gel valve regulated lead acid batteries, and nickel metal hydride batteries.

As an additional example, the fibrous material can contain materials in addition to the fibers. In some embodiments, the fibrous material can contain one or more gelling agents. In certain embodiments, the fibrous material can contain particles of a material (e.g., silica particles).

As another example, electrolytes other than sulfuric acid can be used. For example, the electrolyte can be a hydroxide (e.g., potassium hydroxide).

Other embodiments are in the claims.

## Claims

1. A battery (100), comprising:

   a case (102);
   a cell within the case (102), the cell comprising:

      a plurality of plates (110, 120); and
      a plurality of separators (130), the plates and separators being arranged so that for each pair of adjacent plates:

         a first plate forms an anode plate (110) and a second plate forms a cathode plate (120); and
         a separator (130) is disposed between the anode plate (110) and the cathode plate (120); and

a fibrous material within the case (102), the fibrous material having an average length of less than 0.500 millimeter and at least some of the fibrous material being between the cell and the case (102).

2. The battery (100) of claim 1, wherein the battery (100) is a lead acid battery.

3. The battery (100) of claim 2, further comprising sulfuric acid within the case (102).

4. The battery (100) of claim 3, wherein a first portion of the sulfuric acid is adsorbed on the fibrous material.

5. The battery (100) of claim 4, wherein a second portion of the sulfuric acid is adsorbed in the separators (130).

6. The battery (100) of claim 2, wherein the battery is a valve regulated lead acid battery.

7. The battery (100) of claim 6, wherein the battery is an AGM-type valve regulated lead acid battery.

8. The battery (100) of claim 6, wherein the battery is a flooded valve regulated lead acid battery.

9. The battery (100) of claim 6, wherein the battery is a gel valve regulated lead acid battery.

10. The battery (100) of claim 1, wherein the battery is a nickel metal hydride battery.

11. The battery (100) of claim 10, wherein the fibrous material comprises a polymeric material.

12. The battery (100) of claim 1, wherein the fibrous material comprises a siliceous fibrous material.

13. The battery (100) of claim 1, wherein the fibrous material comprises C glass.

14. The battery (100) of claim 1, wherein the fibrous material comprises a polymeric material.

15. The battery (100) of claim 1, wherein the fibrous material comprises an inorganic material.

16. The battery (100) of claim 1, wherein the fibrous material comprises an organic material.

17. The battery (100) of claim 1, wherein a first portion of the fibrous material comprises an organic material and a second portion of the fibrous material comprises an inorganic material.

18. The battery (100) of claim 1, wherein at least one weight percent of the fibrous material passes through a 10x10 mesh during a shake test.

19. The battery (100) of claim 1, wherein at least five weight percent of the fibrous material passes through a 8x8 mesh during a shake test.

20. The battery (100) of claim 1, wherein at least five weight percent of the fibrous material passes through a 6x6 mesh during a shake test.

21. The battery (100) of claim 1, wherein the fibrous material has an acid absorption of at least 50%.

22. The battery (100) of claim 1, wherein the fibrous material is disposed in a gelling agent.

23. The battery (100) of claim 1, wherein the particles of a material are mixed with the fibrous material.

24. The battery (100) of claim 23, wherein the particles of the material comprise silica particles.

25. The battery of claim 1, wherein the fibrous material has an average length of less than 0.200 millimeter.

26. The battery (100) of claim 1, wherein the fibrous material has an average diameter of less than 40 $\mu$m.

27. The battery (100) of claim 1, wherein the fibrous material has an average aspect ratio of less than 1, 500.

28. The battery (100) of claim 1, wherein the battery has a head space (140) between the cell and the case (102), and a portion of the fibrous material is in the head space (140).

29. The battery (100) of claim 1, wherein the battery has a fringe volume between the cell and the case (102), and a portion of the fibrous material is in the fringe volume.

30. The battery (100) of claim 1, wherein at least some of the fibrous material is adsorbed in at least one of the separators (130).

31. The battery (100) of claim 30, further comprising sulfuric acid adsorbed in the at least one of the separators (130).

32. A process for manufacturing a battery (100) having a case, the process comprising:

   combining a fibrous material with an electrolyte; and
   disposing the fibrous material and the electrolyte in the case of the battery (100),
   wherein the fibrous material has an average length of less than 0.500 millimeter.

33. The process of claim 32, wherein the electrolyte comprises sulfuric acid.

34. The process of claim 32, wherein the electrolyte comprises potassium hydroxide.

35. The process of claim 32, wherein the fibrous material and the electrolyte form a mixture before being disposed in the case, and the process further comprises filtering the mixture to remove at least some of the fibrous material from the mixture before disposing the fibrous material and the electrolyte in the case (102).

36. The process of claim 32, wherein the electrolyte is disposed in the case (102) before the fibrous material is disposed in the case.

37. The process of claim 32, wherein the electrolyte is disposed in the case (102) after the fibrous material is disposed in the case.

38. The process of claim 32, wherein the case (102) is substantially devoid of any electrolyte before the electrolyte is disposed in the case.

39. The process of claim 32, wherein the battery (100) comprises a cell within the case (102), the cell comprising:

   a plurality of plates (110, 120); and
   a plurality of separators (130),
   wherein the plates (110, 120) and separators (130) are arranged so that for each pair of adjacent plates:

      a first plate forms an anode plate (110) and a second plate forms a cathode plate (120); and
      a separator (130) is disposed between the anode plate (110) and the cathode plate (120).

40. The process of claim 39, wherein the battery (100) has a head space (140) between the cell and the case (102), and at least a portion of the fibrous material is disposed within the head space (140).

41. The process of claim 39, wherein the battery (100) has a fringe volume between the cell and the case (102), and at least a portion of the fibrous material is disposed within the fringe volume.

42. The process of claim 39, wherein the cell is constructed before the fibrous material is disposed within the case (102).

43. The process of claim 39, wherein the cell is constructed before the electrolyte is disposed within the case (102).

44. The process of claim 32, wherein the battery (100) is a lead acid battery.

45. The process of claim 32, wherein the battery (100) is a nickel metal hydride battery.

46. The process of claim 32, wherein the fibrous material comprises a siliceous material.

**47.** The process of claim 32, wherein the fibrous material has an average length of less than 0.200 millimeter.

**48.** The process of claim 32, wherein the fibrous material has an average diameter of less than 40 $\mu$m.

**49.** The process of claim 32, wherein the fibrous material has an average aspect ratio of less than 1,500.

**50.** A process for manufacturing a battery (100) having a case (102), the process comprising:

constructing a cell in the case of the battery (100); and
after constructing the cell, disposing a fibrous filler in the case (102),
wherein the cell comprises:

a plurality of plates (110, 120); and
a plurality of separators (130), the plates and separators being arranged so that for each pair of adjacent plates:

a first plate forms an anode plate (110) and a second plate forms a cathode plate (120); and
a separator (130) is disposed between the anode plate (110) and the cathode plate (120),

wherein the fibrous filler has an average length of less than 0.500 millimeter.

**51.** The process of claim 50, further comprising disposing an electrolyte in the case (102).

**52.** The process of claim 51, wherein the electrolyte comprises sulfuric acid;

**53.** The process of claim 51, wherein the electrolyte comprises potassium hydroxide.

**54.** The process of claim 51, wherein the electrolyte is disposed in the case (102) before the fibrous material is disposed in the case.

**55.** The process of claim 51, wherein the electrolyte is disposed in the case (102) after the fibrous material is disposed in the case.

**56.** The process of claim 51, wherein the case (102) is substantially devoid of any electrolyte before the electrolyte is disposed in the case.

**57.** The process of claim 50, wherein the battery (100) has a head space (140) between the cell and the case (102), and at least a portion of the fibrous material is disposed within the head space (140).

**58.** The process of claim 50, wherein the battery (100) has a fringe volume between the cell and the case (102), and at least a portion of the fibrous material is disposed within the fringe volume.

**59.** The process of claim 50, wherein the battery (100) is a lead acid battery.

**60.** The process of claim 50, wherein the battery (100) is a nickel metal hydride battery.

**61.** The process of claim 50, wherein the fibrous material comprises a siliceous material.

**62.** The process of claim 50, wherein the fibrous material has an average length of less than 0.200 millimeter.

**63.** The process of claim 50, wherein the fibrous material has an average diameter of less than 40 $\mu$m.

**64.** The process of claim 50, wherein the fibrous material has an average aspect ratio of less than 1,500.

**Patentansprüche**

**1.** Batterie (100), umfassend:

ein Gehäuse (102);

eine Zelle innerhalb des Gehäuses (102), wobei die Zelle

mehrere Platten (110, 120) und

mehrere Separatoren (130) umfasst, wobei die Platten und Separatoren derart angeordnet sind, dass für jedes Paar benachbarter Platten:

eine erste Platte eine Anodenplatte (110) bildet und eine zweite Platte eine Kathodenplatte (120) bildet und ein Separator (130) zwischen der Anodenplatte (110) und der Kathodenplatte (120) angebracht ist; und ein Fasermaterial in dem Gehäuse (102), wobei das Fasermaterial eine mittlere Länge von weniger als 0,500 mm aufweist und sich mindestens ein Teil des Fasermaterials zwischen der Zelle und dem Gehäuse (102) befindet.

2. Batterie (100) nach Anspruch 1, wobei die Batterie (100) eine Blei-Säure-Batterie ist.

3. Batterie (100) nach Anspruch 2, die ferner Schwefelsäure innerhalb des Gehäuses (102) umfasst.

4. Batterie (100) nach Anspruch 3, wobei ein erster Teil der Schwefelsäure an dem Fasermaterial adsorbiert ist.

5. Batterie (100) nach Anspruch 4, wobei ein zweiter Teil der Schwefelsäure in den Separatoren (130) adsorbiert ist.

6. Batterie (100) nach Anspruch 2, wobei die Batterie eine ventilgeregelte Blei-Säure-Batterie ist.

7. Batterie (100) nach Anspruch 6, wobei die Batterie eine ventilgeregelte Blei-Säure-Batterie des AGM-Typs ist.

8. Batterie (100) nach Anspruch 6, wobei die Batterie eine ventilgeregelte Blei-Säure-Batterie mit freiem Elektrolyt (flooded) ist.

9. Batterie (100) nach Anspruch 6, wobei die Batterie eine mit Gel befüllte, ventilgeregelte Blei-Säure-Batterie ist.

10. Batterie (100) nach Anspruch 1, wobei die Batterie eine Nickel-Metallhydrid-Batterie ist.

11. Batterie (100) nach Anspruch 10, wobei das Fasermaterial ein Polymermaterial umfasst.

12. Batterie (100) nach Anspruch 1, wobei das Fasermaterial ein Silicatfasermaterial umfasst.

13. Batterie (100) nach Anspruch 1, wobei das Fasermaterial C-Glas umfasst.

14. Batterie (100) nach Anspruch 1, wobei das Fasermaterial ein Polymermaterial umfasst.

15. Batterie (100) nach Anspruch 1, wobei das Fasermaterial ein anorganisches Material umfasst.

16. Batterie (100) nach Anspruch 1, wobei das Fasermaterial ein organisches Material umfasst.

17. Batterie (100) nach Anspruch 1, wobei ein erster Teil des Fasermaterials ein organisches Material umfasst und ein zweiter Teil des Fasermaterials ein anorganisches Material umfasst.

18. Batterie (100) nach Anspruch 1, wobei mindestens ein Gewichtsprozent des Fasermaterials während eines Rütteltests durch ein 10x10-Siebnetz hindurchtritt.

19. Batterie (100) nach Anspruch 1, wobei mindestens fünf Gewichtsprozent des Fasermaterials während eines Rütteltests durch ein 8x8-Siebnetz hindurchtreten.

20. Batterie (100) nach Anspruch 1, wobei mindestens fünf Gewichtsprozent des Fasermaterials während eines Rütteltests durch ein 6x6-Siebnetz hindurchtreten.

21. Batterie (100) nach Anspruch 1, wobei das Fasermaterial eine Säureabsorption von mindestens 50 % aufweist.

22. Batterie (100) nach Anspruch 1, wobei sich das Fasermaterial in einem Geliermittel befindet.

23. Batterie (100) nach Anspruch 1, wobei Teilchen eines Materials mit dem Fasermaterial gemischt sind.

24. Batterie (100) nach Anspruch 23, wobei die Teilchen des Materials Siliciumdioxidteilchen umfassen.

25. Batterie nach Anspruch 1, wobei das Fasermaterial eine mittlere Länge von weniger als 0,200 mm aufweist.

26. Batterie (100) nach Anspruch 1, wobei das Fasermaterial einen mittleren Durchmesser von weniger als 40 $\mu$m aufweist.

27. Batterie (100) nach Anspruch 1, wobei das Fasermaterial ein mittleres Seitenverhältnis von weniger als 1500 aufweist.

28. Batterie (100) nach Anspruch 1, wobei die Batterie einen Kopfraum (140) zwischen der Zelle und dem Gehäuse (102) aufweist und sich ein Teil des Fasermaterials im Kopfraum (140) befindet.

29. Batterie (100) nach Anspruch 1, wobei die Batterie ein Randvolumen zwischen der Zelle und dem Gehäuse (102) aufweist und sich ein Teil des Fasermaterials in dem Randvolumen befindet.

30. Batterie (100) nach Anspruch 1, wobei mindestens ein Teil des Fasermaterials in mindestens einem der Separatoren (130) adsorbiert ist.

31. Batterie (100) nach Anspruch 30, die ferner Schwefelsäure, die in dem in mindestens einen der Separatoren (130) adsorbiertt ist, umfasst.

32. Verfahren zur Herstellung einer Batterie (100) mit einem Gehäuse, wobei das Verfahren das Kombinieren eines Fasermaterials mit einem Elektrolyt und das Anbringen des Fasermaterials und des Elektrolyts im Gehäuse der Batterie (100) umfasst, wobei das Fasermaterial eine mittlere Länge von weniger als 0,500 mm aufweist.

33. Verfahren nach Anspruch 32, wobei der Elektrolyt Schwefelsäure umfasst.

34. Verfahren nach Anspruch 32, wobei der Elektrolyt Kaliumhydroxid umfasst.

35. Verfahren nach Anspruch 32, wobei das Fasermaterial und der Elektrolyt vor dem Anbringen in dem Gehäuse ein Gemisch bilden und das Verfahren ferner das Filtrieren des Gemischs zur Entfernung von mindestens einem Teil des Fasermaterials aus dem Gemisch vor dem Anbringen des Fasermaterials und des Elektrolyts in dem Gehäuse (102) umfasst.

36. Verfahren nach Anspruch 32, wobei der Elektrolyt in dem Gehäuse (102) angebracht wird, bevor das Fasermaterial in dem Gehäuse angebracht wird.

37. Verfahren nach Anspruch 32, wobei der Elektrolyt in dem Gehäuse (102) angebracht wird, nachdem das Fasermaterial in dem Gehäuse angebracht wurde.

38. Verfahren nach Anspruch 32, wobei das Gehäuse (102) im wesentlichen frei von jeglichem Elektrolyt ist, bevor der Elektrolyt in dem Gehäuse angebracht wird.

39. Verfahren nach Anspruch 32, wobei die Batterie (100) eine Zelle innerhalb des Gehäuses (102) umfasst, wobei die Zelle
mehrere Platten (110, 120) und
mehrere Separatoren (130) umfasst,
wobei die Platten (110, 120) und Separatoren (130) derart angeordnet sind, dass für jedes Paar benachbarter Platten eine erste Platte eine Anodenplatte (110) bildet und
eine zweite Platte eine Kathodenplatte (120) bildet und
ein Separator (130) zwischen der Anodenplatte (110) und der Kathodenplatte (120) angebracht ist.

40. Verfahren nach Anspruch 39, wobei die Batterie (100) einen Kopfraum (140) zwischen der Zelle und dem Gehäuse (102) aufweist und mindestens ein Teil des Fasermaterials innerhalb des Kopfraums (140) angebracht wird.

41. Verfahren nach Anspruch 39, wobei die Batterie (100) ein Randvolumen zwischen der Zelle und dem Gehäuse (102) aufweist und mindestens ein Teil des Fasermaterials in dem Randvolumen angebracht wird.

42. Verfahren nach Anspruch 39, wobei die Zelle aufgebaut wird, bevor das Fasermaterial in dem Gehäuse (102) angebracht wird.

43. Verfahren nach Anspruch 39, wobei die Zelle aufgebaut wird, bevor der Elektrolyt in dem Gehäuse (102) angebracht wird.

44. Verfahren nach Anspruch 32, wobei die Batterie (100) eine Blei-Säure-Batterie ist.

45. Verfahren nach Anspruch 32, wobei die Batterie (100) eine Nickel-Metallhydrid-Batterie ist.

46. Verfahren nach Anspruch 32, wobei das Fasermaterial ein Silicatmaterial umfasst.

47. Verfahren nach Anspruch 32, wobei das Fasermaterial eine mittlere Länge von weniger als 0,200 mm aufweist.

48. Verfahren nach Anspruch 32, wobei das Fasermaterial einen mittleren Durchmesser von weniger als 40 $\mu$m aufweist.

49. Verfahren nach Anspruch 32, wobei das Fasermaterial ein mittleres Seitenverhältnis von weniger als 1500 aufweist.

50. Verfahren zur Herstellung einer Batterie (100) mit einem Gehäuse (102), wobei das Verfahren das Aufbauen einer Zelle im Gehäuse der Batterie (100) und nach dem Aufbau der Zelle das Anbringen eines Faserfüllstoffs in dem Gehäuse (102) umfasst,
wobei die Zelle
mehrere Platten (110, 120) und
mehrere Separatoren (130) umfasst,
wobei die Platten und Separatoren derart angeordnet sind, dass für jedes Paar benachbarter Platten:

   eine erste Platte eine Anodenplatte (110) bildet und eine zweite Platte eine Kathodenplatte (120) bildet und
   ein Separator (130) zwischen der Anodenplatte (110) und der Kathodenplatte (120) angebracht ist,
   wobei der Faserfüllstoff eine mittlere Länge von weniger als 0,500 mm aufweist.

51. Verfahren nach Anspruch 50, das ferner das Anbringen eines Elektrolyts in dem Gehäuse (102) umfasst.

52. Verfahren nach Anspruch 51, wobei der Elektrolyt Schwefelsäure umfasst.

53. Verfahren nach Anspruch 51, wobei der Elektrolyt Kaliumhydroxid umfasst.

54. Verfahren nach Anspruch 51, wobei der Elektrolyt in dem Gehäuse (102) angebracht wird, bevor das Fasermaterial in dem Gehäuse angebracht wird.

55. Verfahren nach Anspruch 51, wobei der Elektrolyt in dem Gehäuse (102) angebracht wird, nachdem das Fasermaterial in dem Gehäuse angebracht wurde.

56. Verfahren nach Anspruch 51, wobei das Gehäuse (102) im wesentlichen frei von jeglichem Elektrolyt ist, bevor der Elektrolyt in dem Gehäuse angebracht wird.

57. Verfahren nach Anspruch 50, wobei die Batterie (100) einen Kopfraum (140) zwischen der Zelle und dem Gehäuse (102) aufweist und mindestens ein Teil des Fasermaterials innerhalb des Kopfraums (140) angebracht wird.

58. Verfahren nach Anspruch 50, wobei die Batterie (100) ein Randvolumen zwischen der Zelle und dem Gehäuse (102) aufweist und mindestens ein Teil des Fasermaterials innerhalb des Randvolumens angebracht wird.

59. Verfahren nach Anspruch 50, wobei die Batterie (100) eine Blei-Säure-Batterie ist.

60. Verfahren nach Anspruch 50, wobei die Batterie (100) eine Nickel-Metallhydrid-Batterie ist.

**61.** Verfahren nach Anspruch 50, wobei das Fasermaterial ein Silicatmaterial umfasst.

**62.** Verfahren nach Anspruch 50, wobei das Fasermaterial eine mittlere Länge von weniger als 0,200 mm aufweist.

**63.** Verfahren nach Anspruch 50, wobei das Fasermaterial einen mittleren Durchmesser von weniger als 40 μm aufweist.

**64.** Verfahren nach Anspruch 50, wobei das Fasermaterial ein mittleres Seitenverhältnis von weniger als 1500 aufweist.

**Revendications**

**1.** Batterie (100), comprenant :

un logement (102) ;
une cellule dans le logement (102), la cellule comprenant :

une pluralité de plaques (110, 120) ; et
une pluralité de séparateurs (130), les plaques et les séparateurs étant agencés de sorte que, pour chaque paire de plaques adjacentes :
une première plaque forme une plaque d'anode (110) et une deuxième plaque forme une plaque de cathode (120) ; et
un séparateur (130) est disposé entre la plaque d'anode (110) et la plaque de cathode (120) ; et
un matériau fibreux dans le logement (102), le matériau fibreux ayant une longueur moyenne inférieure à 0,500 millimètre et au moins une partie du matériau fibreux étant entre la cellule et le logement (102).

**2.** Batterie (100) selon la revendication 1, dans laquelle la batterie (100) est une batterie au plomb.

**3.** Batterie (100) selon la revendication 2, comprenant en outre de l'acide sulfurique dans le logement (102).

**4.** Batterie (100) selon la revendication 3, dans laquelle une première partie de l'acide sulfurique est adsorbée par le matériau fibreux.

**5.** Batterie (100) selon la revendication 4, dans laquelle une deuxième partie de l'acide sulfurique est adsorbée par les séparateurs (130).

**6.** Batterie (100) selon la revendication 2, dans laquelle la batterie est une batterie au plomb régulée par valve.

**7.** Batterie (100) selon la revendication 6, dans laquelle la batterie est une batterie au plomb régulée par valve de type AGM.

**8.** Batterie (100) selon la revendication 6, dans laquelle la batterie est une batterie au plomb régulée par valve immergée.

**9.** Batterie (100) selon la revendication 6, dans laquelle la batterie est une batterie au plomb régulée par valve gel.

**10.** Batterie (100) selon la revendication 1, dans laquelle la batterie est une batterie nickel métal hydrure.

**11.** Batterie (100) selon la revendication 10, dans laquelle le matériau fibreux comprend un matériau polymérique.

**12.** Batterie (100) selon la revendication 1, dans laquelle le matériau fibreux comprend un matériau fibreux siliceux.

**13.** Batterie (100) selon la revendication 1, dans laquelle le matériau fibreux comprend du verre C.

**14.** Batterie (100) selon la revendication 1, dans laquelle le matériau fibreux comprend un matériau polymérique.

**15.** Batterie (100) selon la revendication 1, dans laquelle le matériau fibreux comprend un matériau inorganique.

**16.** Batterie (100) selon la revendication 1, dans laquelle le matériau fibreux comprend un matériau organique.

**17.** Batterie (100) selon la revendication 1, dans laquelle une première partie du matériau fibreux comprend un matériau organique et une deuxième partie du matériau fibreux comprend un matériau inorganique.

**18.** Batterie (100) selon la revendication 1, dans laquelle au moins un pourcent en poids du matériau fibreux passe à travers un tamis 10 x 10 pendant un test de secouement.

**19.** Batterie (100) selon la revendication 1, dans laquelle au moins cinq pourcents en poids du matériau fibreux passent à travers un tamis 8 x 8 pendant un test de secouement.

**20.** Batterie (100) selon la revendication 1, dans laquelle au moins cinq pourcents en poids du matériau fibreux passent à travers un tamis 6 x 6 pendant un test de secouement.

**21.** Batterie (100) selon la revendication 1, dans laquelle le matériau fibreux a une absorption d'acide d'au moins 50 %.

**22.** Batterie (100) selon la revendication 1, dans laquelle le matériau fibreux est disposé dans un agent gélifiant.

**23.** Batterie (100) selon la revendication 1, dans laquelle les particules d'un matériau sont mélangées avec le matériau fibreux.

**24.** Batterie (100) selon la revendication 23, dans laquelle les particules du matériau comprennent des particules de silice.

**25.** Batterie selon la revendication 1, dans laquelle le matériau fibreux a une longueur moyenne inférieure à 0,200 millimètre.

**26.** Batterie (100) selon la revendication 1, dans laquelle le matériau fibreux a un diamètre moyen inférieur à 40 $\mu$m.

**27.** Batterie (100) selon la revendication 1, dans laquelle le matériau fibreux a un rapport d'aspect moyen inférieur à 1,500.

**28.** Batterie (100) selon la revendication 1, dans laquelle la batterie a un espace de tête (140) entre la cellule et le logement (102), et une partie du matériau fibreux se trouve dans l'espace de tête (140).

**29.** Batterie (100) selon la revendication 1, dans laquelle la batterie a un volume de bordure entre la cellule et le logement (102), et une partie du matériau fibreux se trouve dans le volume de bordure.

**30.** Batterie (100) selon la revendication 1, dans laquelle au moins une partie du matériau fibreux est adsorbée par au moins l'un des séparateurs (130).

**31.** Batterie (100) selon la revendication 30, comprenant en outre de l'acide sulfurique adsorbé par au moins l'un des séparateurs (130).

**32.** Processus pour fabriquer une batterie (100) comportant un logement, le processus comprenant les étapes consistant à :

   combiner un matériau fibreux avec un électrolyte ; et
   disposer le matériau fibreux et l'électrolyte dans le logement de la batterie (100),
   dans lequel le matériau fibreux a une longueur moyenne inférieure à 0,500 millimètre.

**33.** Processus selon la revendication 32, dans lequel l'électrolyte comprend de l'acide sulfurique.

**34.** Processus selon la revendication 32, dans lequel l'électrolyte comprend de l'hydroxyde de potassium.

**35.** Processus selon la revendication 32, dans lequel le matériau fibreux et l'électrolyte forment un mélange avant d'être disposés dans le logement, et le processus comprend en outre la filtration du mélange pour retirer au moins une partie du matériau fibreux du mélange avant de disposer le matériau fibreux et l'électrolyte dans le logement (102).

**36.** Processus selon la revendication 32, dans lequel l'électrolyte est disposé dans le logement (102) avant que le matériau fibreux ne soit disposé dans le logement.

**37.** Processus selon la revendication 32, dans lequel l'électrolyte est disposé dans le logement (102) après que le matériau fibreux ait été disposé dans le logement.

**38.** Processus selon la revendication 32, dans lequel le logement (102) est sensiblement dépourvu d'électrolyte avant que l'électrolyte ne soit disposé dans le logement.

**39.** Processus selon la revendication 32, dans lequel la batterie (100) comprend une cellule dans le logement (102), la cellule comprenant :

    une pluralité de plaques (110, 120) ; et
    une pluralité de séparateurs (130),
    dans lequel les plaques (110, 120) et les séparateurs (130) sont agencés de sorte que, pour chaque paire de plaques adjacentes :
    une première plaque forme une plaque d'anode (110) et une deuxième plaque forme une plaque de cathode (120) ; et
    un séparateur (130) est disposé entre la plaque d'anode (110) et la plaque de cathode (120).

**40.** Processus selon la revendication 39, dans lequel la batterie (100) comporte un espace de tête (140) entre la cellule et le logement (102), et au moins une partie du matériau fibreux est disposée dans l'espace de tête (140).

**41.** Processus selon la revendication 39, dans lequel la batterie (100) comporte un volume de bordure entre la cellule et le logement (102), et au moins une partie du matériau fibreux est disposée dans le volume de bordure.

**42.** Processus selon la revendication 39, dans lequel la cellule est réalisée avant que le matériau fibreux ne soit disposé dans le logement (102).

**43.** Processus selon la revendication 39, dans lequel la cellule est réalisée avant que l'électrolyte ne soit disposé dans le logement (102).

**44.** Processus selon la revendication 32, dans lequel la batterie (100) est une batterie au plomb.

**45.** Processus selon la revendication 32, dans lequel la batterie (100) est une batterie nickel métal hydrure.

**46.** Processus selon la revendication 32, dans lequel le matériau fibreux comprend un matériau siliceux.

**47.** Processus selon la revendication 32, dans lequel le matériau fibreux a une longueur moyenne inférieure à 0,200 millimètre.

**48.** Processus selon la revendication 32, dans lequel le matériau fibreux a un diamètre moyen inférieur à 40 $\mu$m.

**49.** Processus selon la revendication 32, dans lequel le matériau fibreux a un rapport d'aspect moyen inférieur à 1,500.

**50.** Processus pour fabriquer une batterie (100) comportant un logement (102), le processus comprenant les étapes consistant à :

    réaliser une cellule dans le logement de la batterie (100) ; et
    après avoir réaliser la cellule, disposer un agent de remplissage fibreux dans le logement (102),
    dans lequel la cellule comprend :

        une pluralité de plaques (110, 120) ; et
        une pluralité de séparateurs (130), les plaques et les séparateurs étant agencés de sorte que, pour chaque paire de plaques adjacentes :
        une première plaque forme une plaque d'anode (110) et une deuxième plaque forme une plaque de cathode (120) ; et
        un séparateur (130) est disposé entre la plaque d'anode (110) et la plaque de cathode (120),
        dans lequel l'agent de remplissage fibreux a une longueur moyenne inférieure à 0,500 millimètre.

**51.** Processus selon la revendication 50, comprenant en outre l'étape consistant à disposer un électrolyte dans le logement (102).

**52.** Processus selon la revendication 51, dans lequel l'électrolyte comprend de l'acide sulfurique.

**53.** Processus selon la revendication 51, dans lequel l'électrolyte comprend de l'hydroxyde de potassium.

**54.** Processus selon la revendication 51, dans lequel l'électrolyte est disposé dans le logement (102) avant que le matériau fibreux ne soit disposé dans le logement.

**55.** Processus selon la revendication 51, dans lequel l'électrolyte est disposé dans le logement (102) après que le matériau fibreux ait été disposé dans le logement.

**56.** Processus selon la revendication 51, dans lequel le logement (102) est sensiblement dépourvu d'électrolyte avant que l'électrolyte ne soit disposé dans le logement.

**57.** Processus selon la revendication 50, dans lequel la batterie (100) comporte un espace de tête (140) entre la cellule et le logement (102), et au moins une partie du matériau fibreux est disposée dans l'espace de tête (140).

**58.** Processus selon la revendication 50, dans lequel la batterie (100) a un volume de bordure entre la cellule et le logement (102), et au moins une partie du matériau fibreux est disposée dans le volume de bordure.

**59.** Processus selon la revendication 50, dans lequel la batterie (100) est une batterie au plomb.

**60.** Processus selon la revendication 50, dans lequel la batterie (100) est une batterie nickel métal hydrure.

**61.** Processus selon la revendication 50, dans lequel le matériau fibreux comprend un matériau siliceux.

**62.** Processus selon la revendication 50, dans lequel le matériau fibreux a une longueur moyenne inférieure à 0,200 millimètre.

**63.** Processus selon la revendication 50, dans lequel le matériau fibreux a un diamètre moyen inférieur à 40 $\mu$m.

**64.** Processus selon la revendication 50, dans lequel le matériau fibreux a un rapport d'aspect moyen inférieur à 1,500.

FIG. 1

Fig. 2

Fig. 3

310

300

315

320

330

350

342

340

322

EP 1 611 621 B1